# EUROPÄISCHE PATENTSCHRIFT

(11) **EP 3 199 013 B1**
(45) Veröffentlichungstag und Bekanntmachung des Hinweises auf die Patenterteilung: **17.10.2018**
(21) Anmeldenummer: 16176764.5
(22) Anmeldetag: 28.06.2016
(51) Int. Cl.: A01D 75/20, E01F 7/00

(54) **ABSCHIRMVORRICHTUNG FÜR EIN ABSCHIRMFAHRZEUG UND VERFAHREN ZUM PFLEGEN EINES GRÜNSTREIFENS**
SHIELDING DEVICE FOR A SHIELDING VEHICLE, METHOD FOR MAINTAINING A GREEN STRIP
PROTEGER DISPOSITIF POUR UN BLINDAGE DE VEHICULE, PROCÉDÉ POUR MAINTENIR UNE BANDE VERTE

(43) Veröffentlichungstag der Anmeldung: 02.08.2017
(73) Patentinhaber: Thom, Detlef, 14979 Birkenhain (DE)
(72) Erfinder: Thom, Detlef, 14979 Birkenhain (DE)
(74) Vertreter: Seliger, Knut

(56) Entgegenhaltungen:
- WO-A1-2014/003631
- FR-A1- 2 923 353
- US-A- 4 445 312
- US-A1- 2010 186 240
- US-A1- 2015 240 432

## Beschreibung

Die Erfindung betrifft eine Abschirmvorrichtung für ein Abschirmfahrzeug zum Schutz vor aufgewirbeltem Mähgut, insbesondere bei der Pflege von Grünstreifen einer Straße, ein Abschirmfahrzeug zum Schutz vor aufgewirbeltem Mähgut, ein Fahrzeuggespann zur Pflege von Grünstreifen einer Straße sowie ein Verfahren zum Pflegen, insbesondere zum Mähen, eines Grünstreifens einer Straße.
Die Pflege von begrünten Seiten- oder Mittelstreifen von Straßen ist eine regelmäßig auszuführende Arbeit, bei der beispielsweise Sträucher beschnitten, Gras gemäht und Bewuchs entfernt werden. Diese Arbeit, insbesondere notwendig auf Autobahnen, Bundes- und Landstraßen ist mit nicht unerheblichem Personalaufwand verbunden, außerdem müssen typischerweise Fahrstreifen der Straße gesperrt werden, um eine Gefährdung des Verkehrs auszuschließen. Eine solche könnte sich beispielsweise aus umherfliegenden Pflanzenteilen, aufgewirbeltem Staub, Mähgutteilen oder Steinschlag ergeben und ist in jedem Fall zu verhindern.
Zum Sperren von Fahrstreifen werden typischerweise mehrere Fahrzeuge benötigt, da Leitkegel, auch Pylone genannt, vor der Mahd im zu mähenden Straßenabschnitt aufgestellt werden und danach wieder eingesammelt werden müssen. Weiterhin wird Personal und ggf. ein Fahrzeug zum Mähen benötigt. Somit ist der Personal- und Materialaufwand hoch, was zu hohen Kosten führt. Des Weiteren führt das Sperren von Fahrstreifen nicht selten zu einer Beeinträchtigung des Verkehrsflusses, beispielsweise durch Stau.
Die US 4 445 312 A beschreibt ein Mähkopf und eine Mähmaschine. Die Mähmaschine umfasst eine Antriebsmaschine, einen daran angeordneten Arm sowie einen am Arm angeordneten Mähkopf mit einem Messer und einer Abschirmvorrichtung in Form eines Schildes. Weiterhin umfasst der Mähkopf eine verschiebliche Schutzvorrichtung, mittels derer der Mähbereich selektiv freigegeben werden kann sowie ein Vorspannmittel, mit welchem die Schutzvorrichtung entgegen einer gewählten Kraft nach hinten bewegt werden kann.
Es ist somit die Aufgabe der Erfindung, eine Abschirmvorrichtung sowie ein Abschirmfahrzeug, ein Fahrzeuggespann und ein Verfahren zur Verfügung zu stellen, die die Pflege von Grünstreifen auf einfache, kostengünstige und effiziente Weise ermöglichen. Zur Lösung der Aufgabe werden eine Abschirmvorrichtung für ein Abschirmfahrzeug zum Schutz vor aufgewirbeltem Mähgut gemäß Anspruch 1, ein Abschirmfahrzeug zum Schutz vor aufgewirbeltem Mähgut gemäß Anspruch 9, ein Fahrzeuggespann zur Pflege von Grünstreifen einer Straße gemäß Anspruch 13 sowie ein Verfahren zum Pflegen, insbesondere zum Mähen, eines Grünstreifens gemäß Anspruch 14 zur Verfügung gestellt. Vorteilhafte Ausgestaltungen der Abschirmvorrichtung sind in den Unteransprüchen 2-8 angegeben und vorteilhafte Ausgestaltungen des Abschirmfahrzeugs sind in den Unteransprüchen 10-12 dargestellt.
Ein erster Aspekt der Erfindung ist eine Abschirmvorrichtung für ein Abschirmfahrzeug zum Schutz vor aufgewirbeltem Mähgut, insbesondere bei der Pflege von Grünstreifen einer Straße, welche zumindest ein Kragelement, ein erstes Abschirmflächenelement sowie ein zweites Abschirmflächenelement aufweist. Das Kragelement ist geeignet, auf einem Abschirmfahrzeug befestigt und angebracht zu werden zum - ausgehend von einer Spur des betreffenden Abschirmfahrzeugs - Überbrücken eines Nachbarstreifens. Das erste Abschirmflächenelement ist geeignet zur Begrenzung eines Nachbarstreifens auf einer Außenseite, wobei das erste Abschirmflächenelement eine Erstreckungsrichtung in einer Hauptfahrtrichtung eines Abschirmfahrzeugs aufweist und die Erstreckungsrichtung an der Außenseite parallel zu einem Nachbarstreifen ausrichtbar ist. Das zweite Abschirmflächenelement ist geeignet zur Begrenzung eines Nachbarstreifens auf einer Spurseite, wobei das zweite Abschirmflächenelement eine Erstreckungsrichtung in einer Hauptfahrtrichtung eines Abschirmfahrzeugs aufweist und die Erstreckungsrichtung an der Spurseite parallel zu einem Nachbarstreifen ausrichtbar ist, wobei die Abschirmflächenelemente im Wesentlichen den gesamten Abstand zwischen dem Kragelement und dem Boden abschirmend überbrücken.
Dabei ist der Abstand zwischen dem ersten Abschirmflächenelement und dem zweiten Abschirmflächenelement veränderbar.
Das Abschirmfahrzeug ist dabei ein geeignet ausgestaltetes Fahrzeug, zum Beispiel ein Anhänger eines Lastkraftwagens oder ein motorisiertes Fahrzeug. Das Kragelement ist beispielsweise ein Auslegerarm, der in einer seitlich zu Spur ausgerichteten Position am Abschirmfahrzeug angeordnet ist. Dieses weist in der Draufsicht im Wesentlichen und insbesondere genau im rechten Winkel zu Spur. Dabei verläuft die Spur in Fahrtrichtung des Abschirmfahrzeugs.
Der zu überbrückende Nachbarstreifen ist insbesondere ein zum mähender oder anderweitig zu pflegender Streifen einer Straße neben der Fahrbahn. Dieser wird auch als Grünstreifen bezeichnet. Ein Grünstreifen kann dabei ein Trennstreifen, auch als Mittelstreifen bezeichnet, oder ein Seitenstreifen der Straße sein.
Das erste Abschirmflächenelement ist insbesondere am auskragenden Ende des Auslegerarms angeordnet. Das zweite Abschirmflächenelement ist insbesondere an einer näher am Fahrzeug befindlichen Position des Auslegerarms angeordnet. Das erste und/oder zweite Abschirmflächenelement kann dabei beispielsweise als Plane ausgestaltet sein.
Die Abschirmflächenelemente dienen dabei dem effektiven Schutz vor herumschleuderndem Mähgut, Pflanzenteilen, Steinen und anderen Objekten. Insbesondere sind die Abschirmflächenelemente vor Rotation um eine vertikale Achse im Punkt ihrer Aufhängung geschützt. Sie verlaufen im Wesentlichen und insbesondere genau vertikal, mit anderen Worten: Sie hängen vom Auslegerarm nach unten. Dabei können sie beispielsweise drehgelenkig am Auslegerarm fixiert sein.
Es ist auch denkbar, dass zwei oder mehrere Auslegerarme in einem gewissen Abstand angeordnet sind, sodass die Abschirmelemente zwischen diesen aufgespannt werden können. In diesem Fall sind die Auslegerarme typischerweise bezogen auf die Spurrichtung hintereinander angeordnet und können beispielsweise einen Abstand zwischen 1 und 15 m, insbesondere zwischen 3 und 10 m, aufweisen.
Die Abschirmflächenelemente überbrücken im Wesentlichen den gesamten Abstand und vorzugsweise genau den gesamten Abstand zwischen dem Kragelement und dem Boden und schirmen in diesem Bereich aufgewirbelte Objekte von der Fahrbahn ab. Je nach Bodenbeschaffenheit ist ein gewisser Abstand zwischen dem Boden und dem Abschirmflächenelement nicht zu vermeiden, insbesondere um Beschädigungen der Abschirmflächenelemente an deren Unterseiten zu vermeiden. Dieser Bereich ist im Sinne einer vollständigen Abschirmung zu minimieren.
Mit der erfindungsgemäßen Abschirmvorrichtung ist insbesondere manuelles Mähen trotz befahrener Straße möglich, da die Straße effektiv vor herumschleuderndem Mähgut und anderen Objekten geschützt wird. Es ist allerdings auch maschinelles Mähen mit effektiver Abschirmung möglich. Zu diesem Zweck ist beispielsweise zwischen den Abschirmflächenelementen ein maschinelles Mähwerk angeordnet. Mit der erfindungsgemäßen Abschirmvorrichtung kann die Grünstreifenpflege, und insbesondere das Mähen der Grünstreifen, ohne Sperrung der Straße beziehungsweise ohne Sperrung von Spuren der Straße erfolgen, was Kosten spart sowie den Verkehrsfluss optimiert.

Es ist der Abstand zwischen den Abschirmflächenelementen und somit die Arbeitsbreite, die für das Mähen bzw. Pflegen genutzt werden kann, an die Spurbreite des zu pflegenden Grünstreifens anpassbar. Insbesondere kann bei schmalem Grünstreifen ein schmaler Arbeitsbereich geschaffen werden und bei breiterem Grünstreifen dementsprechend ein breiterer Arbeitsbereich. Dies hat den Vorteil, dass die Abstimmung optimal an die gewünschte Breite anpassbar ist. Weiterhin können damit die Abmessungen der Abschirmvorrichtung bei Bedarf minimiert werden, beispielsweise für den Transport.

In einer weiteren Ausgestaltung der Erfindung umfasst das Kragelement zumindest einen Teleskoparm, wobei das erste Abschirmflächenelement bei einem Außenende des Teleskoparms und das zweite Abschirmflächenelement beim Spurende derart angeordnet sind, dass der Abstand zwischen dem ersten Abschirmflächenelement und dem zweiten Abschirmflächenelement mittels einer Längenänderung des Teleskoparms veränderbar ist. Dabei ist besonders bevorzugt das Kragelement derart verkürzbar und/oder verkippbar, dass dieses maximal eine Breite einer Spur überbrückt.
Der Teleskoparm ist mit einfachen technischen Möglichkeiten in seiner Länge veränderbar, um den Abstand der Abschirmflächenelemente an die gewünschte Arbeitsbreite anzupassen. Dazu ist insbesondere das erste Abschirmflächenelement im nicht teleskopierbaren Bereich des Kragelements angeordnet und das zweite Abschirmflächenelement am Ende des Teleskoparms, sodass ein Ein- beziehungsweise Ausfahren des Teleskoparms eine Relativbewegung der Abschirmflächenelemente ermöglicht. Die Abschirmflächenelemente sind genau an die gewünschte Spurbreite des zu pflegenden Streifens anpassbar. Auch ein Kippen des Kragelements, also des Auslegerarms ist möglich, um dessen Winkel zur Horizontalen, also die Höhe der Oberseiten der Abschirmflächenelemente zu beeinflussen.
Ein wesentlicher Vorteil ist, dass die Größe des Arbeitsbereichs einfach, komfortabel und sicher einstellbar ist.

In einer weiteren Ausgestaltung umfasst das Kragelement ein drittes Abschirmflächenelement, welches bei einem Spurende und bei einem Außenende arretierbar ist. Dies schützt und überbrückt verlängerbar einen Nachbarstreifen, wobei bevorzugt das dritte Abschirmflächenelement beim Außenende oder beim Spurende ausziehbar gelagert ist.
Mit anderen Worten ist das dritte Abschirmflächenelement insbesondere an zwei Punkten des Kragelements, also des Auslegerarms, befestigt. Somit bildet es einen im Wesentlichen horizontal ausgerichteten Schutz oberhalb des Arbeitsbereiches in Form eines Daches. Damit bietet die Abschirmvorrichtung insgesamt Schutz von bzw. nach drei Seiten. Das dritte Abschirmflächenelement kann beispielsweise aus einem Vliesstoff bestehen.
Bei Ein- beziehungsweise Ausfahren des Teleskoparms passt sich die Breite des dritten Abschirmflächenelements dem Abstand des ersten Abschirmflächenelements vom zweiten Abschirmflächenelement an. Dies ist beispielsweise dadurch möglich, dass das dritte Abschirmflächenelement, welches alternativ ebenfalls eine Plane sein kann, mit einer Seite an einer Welle befestigt ist und auf dieser zumindest teilweise aufgewickelt beziehungsweise aufgerollt ist. Die Welle kann mit einer Feder im aufgerollten Zustand gehalten werden. Bei Hinausfahren des Teleskoparms kann somit ein erster Teil der Plane von der Welle abgerollt werden und ein zweiter Teil verbleibt aufgerollt auf der Welle. Somit ist die Breite des dritten Abschirmflächenelements einstellbar.
Der Vorteil dieser Ausgestaltung ist, dass im Arbeitsbereich Schutz vor beispielsweise Sonneneinstrahlung, Regen und/oder Steinschlag gegeben ist. Weiterhin wird die Umgebung auch gegen nach oben aufgewirbelt Objekte wie zum Beispiel Mähgut geschützt.

In einer weiteren Ausgestaltung der Erfindung ist das Kragelement in einer vertikalen Ebene verschwenkbar. Bevorzugt ist das Maß der herunterhängenden Tiefe des ersten Abschirmflächenelements und/oder das Maß der herunterhängenden Tiefe des zweiten Abschirmflächenelements anpassbar. Dies ist bevorzugt mittels einer ersten Ausziehlagerung für das erste Abschirmflächenelement beziehungsweise einer zweiten Ausziehlagerung für das zweite Abschirmflächenelement realisiert.
Das bedeutet, dass das Kragelement nach oben oder unten verschwenkbar ist, also ein Winkel zwischen dem Auslegerarm und der Vertikalen einstellbar ist. Dieser kann beispielsweise zwischen 40° und 140° liegen. Damit ist die Höhe des abgeschirmten Bereichs einstellbar und damit der abgeschirmte Bereich an unterschiedliche Spurniveaus anpassbar.
Die Maße der herunterhängenden Tiefen insbesondere beider Abschirmflächenelemente sind anpassbar an die Höhe des zu bearbeitenden Grünstreifens in Bezug zur Höhe der Fahrbahn. Auf diese Weise sind Niveauunterschiede der Spuren ausgleichbar.
Dazu ist, wie bereits beschrieben, wenigstens eines der Abschirmflächenelemente, die beispielsweise Planen sein können, beispielsweise an einer Welle befestigt und auf dieser aufgewickelt beziehungsweise aufgerollt. Weiterhin ist diese Welle im aufgerollten Zustand von einer Feder gehalten, und es ist insbesondere möglich, dass Teile der Plane aufgerollt auf der Welle verbleiben, während der jeweils andere Teil der Plane in abgerolltem Zustand herunterhängt. Dies ist eine einfache Möglichkeit, die herunterhängende Tiefe anpassbar auszugestalten. Bevorzugt weisen sowohl das erste als auch das zweite Abschirmflächenelement eine derartige Welle und Einrichtung zur Längenanpassung auf.
Weiterhin können Ketten zur Aufhängung der Abschirmflächenelemente angeordnet sein, die je nach gewünschter Position in unterschiedlichen Kettengliedern fein abgestuft am Kragelement befestigt werden können. Alternativ ist auch die Aufhängung der Abschirmflächenelemente an Seilen möglich. Die Höheneinstellung kann in diesem Fall über motorbetriebene Seilwinden erfolgen, die am Kragelement angeordnet sind. Derartige Befestigungen ermöglichen einen Zwischenraum zwischen den im Wesentlichen vertikalen und dem im Wesentlichen horizontalen Abschirmflächenelement.
Ein Vorteil dieser Ausgestaltung ist die flexible Anpassung der Höhe an die Anforderungen des Arbeitsbereichs.
In einer weiteren Ausgestaltung ist das Kragelement an einem Ständerwerk in einer vertikalen Ebene verschwenkbar befestigt, wobei das Ständerwerk auf einem Abschirmfahrzeug befestigbar ist, wobei zum Verschwenken zumindest eines der folgenden Elemente vorgesehen ist: eine hydraulische, pneumatische oder elektrische Hubeinrichtung zwischen dem Kragelement und dem Ständerwerk, oder ein Seilzug beziehungsweise ein Kettenzug an einem gegenüberliegend des Nachbarstreifens sich erstreckenden Hebelkragabschnitts des Kragelements und dem Ständerwerk. Bevorzugt ist weiterhin ein Arretiermittel zum Festsetzen einer Schwenkstellung vorgesehen, besonders bevorzugt mit Bolzenrastung.
Wie beschrieben ist der Auslegerarm in der vertikalen Ebene verschwenkbar angeordnet, kann also, insbesondere mittels Rotation um eine horizontale Schwenkachse, herauf bzw. herunter geschwenkt werden. Insbesondere ist der Winkel der Verschwenkung arretierbar, sodass eine feste und sichere Verbindung hergestellt wird. Dies ist beispielsweise mittels einer Bolzenrastung möglich. Insbesondere ist es auch möglich, dass die vertikale Verschwenkung auch fernsteuerbar ausgeführt werden kann.
Ein Kettenzug oder Seilzug kann dabei an einer der Abschirmvorrichtung abgewandten Seite des Kragelements, also beispielsweise des Auslegerarms, angeordnet sein und dieses in seiner eingestellten Position beispielweise am Fahrzeug bzw. am Ständerwerk fixieren. Damit ist die Position des Auslegerarms und damit der Abschirmvorrichtung in Bezug zum Fahrzeug fixiert. Alternativ kann an einer der Abschirmvorrichtung abgewandten oder zugewandten Seite des Auslegerarms eine hydraulische, pneumatische oder elektrische Hubeinrichtung zwischen dem Kragelement und dem Ständerwerk angeordnet sein, um die Positionierung des Auslegerarms und dessen Fixierung zu gewährleisten.

In einer weiteren Ausgestaltung ist das Kragelement zwischen einer Position in im Wesentlichen paralleler Ausrichtung zur Spur und einer Position in im Wesentlichen senkrechter Ausrichtung zur Spur schwenkbar ist.
Mit anderen Worten ist das Kragelement beidseitig, sowohl nach links als auch nach rechts, in Bezug zur Fahrtrichtung schwenkbar. Die gewünschte und eingestellte Stellung ist insbesondere auch arretierbar ausgestaltet.

Beispielsweise kann das Kragelement um eine im Wesentlichen und insbesondere genau vertikal liegende Achse gedreht werden. Alternativ kann, in einer einfacheren Ausführungsform, das Kragelement eine vertikale Schwenkung, wie beschrieben, durchführen, die das Kragelement über seinen Zenit heraus schwenkt und auf der anderen Seite wieder herabsenkt. Für ein derartiges Manöver können beispielsweise die Abschirmflächenelemente und ggf. vorhandene Vorrichtungen zur Fixierung des Schwenkwinkels demontiert werden.
Wesentlicher Vorteil ist hierbei, dass ein Richtungswechsel möglich ist. Beispielsweise sind Mittelstreifen und Seitenstreifen auf diese Weise bearbeitbar beziehungsweise abschirmbar.

In einer weiteren Ausgestaltung umfasst zumindest ein Abschirmflächenelement eine Plane und zur Sicherung gegen Aufwirbeln der Plane zumindest eines der folgenden Elemente: zumindest ein Gewicht beim Bodenende der Plan; oder zumindest ein Halteseil, beziehungsweise zumindest eine Haltekette.
Insbesondere kann wenigstens ein Abschirmflächenelement zum Teil oder vollständig als Plane ausgestaltet sein, wobei an der Plane Elemente zur Sicherung und/oder zur Fixierung angeordnet sein können.

Die Unterkante der Plane kann mit einer Führungsschiene verbunden sein und/oder es kann ein Abschlusselement angeordnet sein. Somit ist die Unterkante gesichert, beispielsweise gegen Ausfransen, und stabilisiert. Die Führungsschiene kann beispielsweise dazu ausgestaltet sein, sich entlang einer Leitplanke zu bewegen und dadurch die Position der entsprechenden Plane zu definieren. Die Planen können wie beschrieben vom Gewichten nach unten gezogen und in der dortigen Position gehalten werden, nehmen also insbesondere eine vertikale Ausrichtung ein. Gewichte können zum Beispiel an einer Führungsschiene und/oder an einem Abschlusselement angeordnet sein.
Weiterhin können Halteseile und/oder Halteketten zwischen dem Kragelement und den Abschirmflächenelementen zur Stabilisierung angeordnet sein. Diese können beispielsweise vorgespannt sein, um ein Schwenken beziehungsweise Pendeln der Abschirmflächenelemente effektiv zu verhindern. Sie können direkt am jeweiligen Abschirmflächenelement, beispielsweise an der Plane, oder an daran angebrachten Führungsschienen beziehungsweise unteren Abschlusselementen angeordnet sein.

In einer weiteren Ausgestaltung der Erfindung ist bzw. sind das erste Abschirmflächenelement und/oder das zweite Abschirmflächenelement zumindest teilweise transparent.

Die Abschirmflächenelemente sind zumindest teilweise und insbesondere vollständig transparent. Dies ermöglicht eine gute Sicht, beispielsweise eine gute Sicht des den Grünstreifen Pflegenden bzw. Mähenden auf den Verkehr, und eine gute Beleuchtung des Arbeitsbereichs. Weiterhin kann der Führer des Abschirmfahrzeugs die Arbeiten überwachen und sein Fahrttempo daran anpassen. Beispielsweise kann dieser Effekt durch transparente oder wenigstens teilweise transparente Planen ausgeführt werden.

Ein weiterer Aspekt der Erfindung ist ein Abschirmfahrzeug zum Schutz vor aufgewirbeltem Mähgut, insbesondere bei der Pflege von Grünstreifen einer Straße, welches zumindest ein Fahrgestell zum Befahren einer Spur einer Straße und eine erfindungsgemäße Abschirmvorrichtung, welche am Fahrgestell befestigt ist, umfasst.
Das Fahrgestell ist dabei beispielsweise ein Anhänger für ein Zugfahrzeug. Vorzugsweise ist der Anhänger ein Tandem-Anhänger, insbesondere mit einer Gesamtmasse von mindestens 2,5t.
Es kann alternativ auch ein selbstfahrendes Fahrzeug sein. Die Abschirmvorrichtung ist dabei insbesondere an der der Straße abgewandten Seite des Fahrgestells, also der Oberseite, auf dem Fahrgestell befestigt. Sie kann dabei wie beschrieben beispielsweise vertikal verschwenkbar und/oder um eine vertikale Achse drehbar befestigt sein.
Der wesentliche Vorteil ist, dass mit dem erfindungsgemäßen Abschirmfahrzeug ein Abschirmen eines Arbeitsstreifens für Pflegearbeiten von Grünstreifen einfach und sicher durchführbar ist.

In einer Ausgestaltung des Abschirmfahrzeugs ist zumindest einer der folgenden Parameter aus einem Fahrzeugführerhaus bedienbar, bevorzugt elektronisch:
- die Längenveränderung des Kragelements;
- der Schwenkwinkel des Kragelements in vertikaler Richtung;
- der Schwenkwinkel des Kragelements in horizontaler Richtung;
- die Tiefe des ersten Abschirmflächenelements;
- die Tiefe des zweiten Abschirmflächenelements und
- die Breite des dritten Abschirmflächenelements.
Es können also die herausstehende Länge des teleskopierbaren Arms und/oder der Schwenkwinkel des Kragelements zur Vertikalen bzw. zur Horizontalen aus dem Führerhaus eines Fahrzeugs heraus bedienbar ausgestaltet sein. Weiterhin können insbesondere die herunterhängenden Tiefen der ersten und zweiten Abschirmflächenelemente zur Anpassung an das Bodenniveau anpassbar sein. Die Breite des dritten Abschirmflächenelements ergibt sich insbesondere aus der Stellung des Teleskoparms und ist demnach auch vorzugsweise aus dem Führerhaus heraus einstellbar.
Ein wesentlicher Vorteil ist, dass die Anpassung an Niveauunterschiede und/oder die Einstellung von gewünschten Positionen schnell, einfach und ohne großen Personaleinsatz möglich ist. So kann das Abschirmfahrzeug stets rasch an die jeweiligen Anforderungen angepasst werden.

In einer Ausgestaltung des Abschirmfahrzeugs weist dieses und/oder die Abschirmvorrichtung eine Aufnahme zum Transport von Werkzeug, bevorzugt umfassend einen Motorfreischneider, auf.
Somit ist das gesamte benötigte Mähwerkzeug und eventuell zusätzlich notwendiges Werkzeug am Fahrzeug lagerbar und transportierbar.

In einer Ausgestaltung des Abschirmfahrzeugs ist dieses ein Anhänger für ein Zugfahrzeug. Insbesondere ist das Abschirmfahrzeug mit einer genormten Kupplungseinrichtung zur Anbindung an eine beliebige Zugmaschine ausgestaltet. Die Anordnung einer erfindungsgemäßen Abschirmvorrichtung auf einem Anhänger für ein Zugfahrzeug ist insbesondere vorteilhaft, um dem Fahrer des Zugfahrzeugs eine gute Sicht zu ermöglichen. Dennoch ist nicht auszuschließen, dass bei entsprechender Ausgestaltung des Abschirmfahrzeugs dieses auch ein selbstfahrendes Fahrzeug, welches eine erfindungsgemäße Abschirmvorrichtung aufweist, sein kann.

Ein weiterer erfindungsgemäßer Aspekt ist ein Fahrzeuggespann zur Pflege von Grünstreifen einer Straße, welches einen Zugwagen mit einem Fahrzeugführerhaus sowie einen Anhänger umfasst. Der Anhänger ist ein erfindungsgemäßes Abschirmfahrzeug, und der Zugwagen umfasst bevorzugt eine Steuereinheit im Fahrzeugführerhaus, mittels welcher die Abschirmvorrichtung bevorzugt erfindungsgemäß einstellbar ist.
Damit wird ein vollständiges Gespann zu Grünstreifenpflege inklusive einer effektiven und sicheren Abschirmung und bevorzugt elektronisch einstellbaren Betriebsparametern zur Verfügung gestellt.

Ein vierter Aspekt der Erfindung ist ein Verfahren zum Pflegen, insbesondere Mähen, eines Grünstreifens einer Straße, umfassend die Bereitstellung einer erfindungsgemäßen Abschirmvorrichtung oder eines erfindungsgemäßen Abschirmfahrzeugs sowie das Abfahren des Grünstreifens bei gleichzeitiger mechanischer Einwirkung auf den Pflanzenbestand auf dem Grünstreifen, insbesondere Mähen des Grünstreifens.
Das Abfahren des Grünstreifens meint insbesondere das Fahren auf einer Spur, die benachbart zum zu pflegenden Grünstreifen befindlich ist, also das Fahren parallel zum zu pflegenden Grünstreifen. Beispielsweise kann eine Arbeitskraft mit einem Motorfreischneider im abgeschirmten Bereich den Grünstreifen mähen, während sich die Abschirmvorrichtung, beispielsweise mit einem Abschirmfahrzeug, angepasst an die Arbeitsgeschwindigkeit der Arbeitskraft parallel zum Grünstreifen bewegt.

Mit dem erfindungsgemäßen Verfahren können Seitenstreifen und Mittelstreifen von Straßen einfach, kostengünstig und effizient gepflegt, insbesondere gemäht, werden. Jedoch sind auch das Abholzen von Buschwerk und andere Pflegearbeiten auf Grünstreifen mit dem Verfahren möglich.
Dabei ist das Verfahren zum Pflegen eines Grünstreifens einer Straße vorzugsweise derart auszuführen, dass die erfindungsgemäße Abschirmvorrichtung in Modulen an den Ort ihres planmäßigen Einsatzes transportiert wird, dort zusammengesetzt und/ oder auf einem Fahrzeug angeordnet wird, und dann der Pflege-, insbesondere der Mähprozess, durchgeführt wird.

Die Erfindung wird im Folgenden anhand des in der beiliegenden Zeichnung dargestellten Ausführungsbeispiels erläutert.

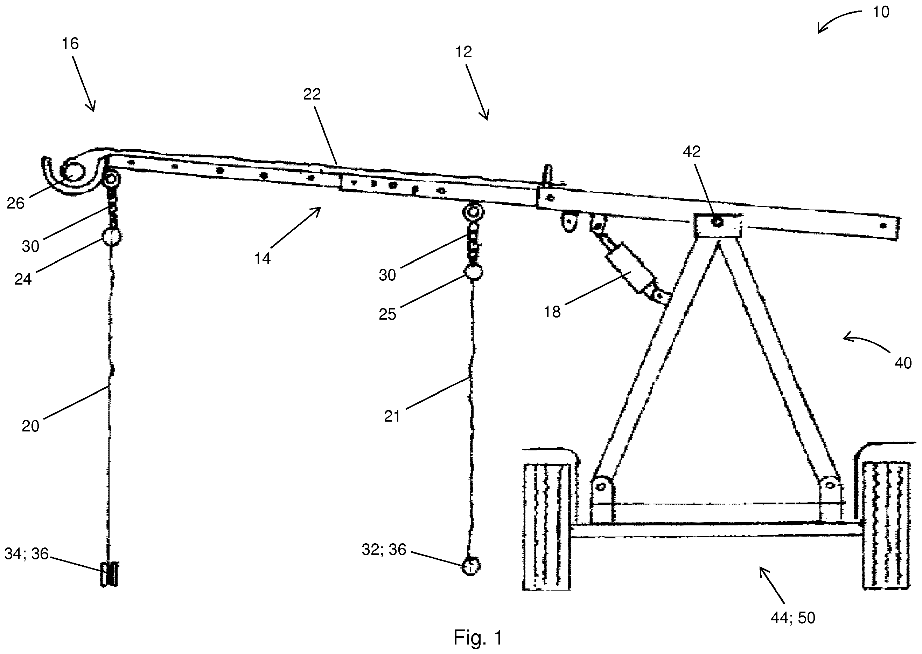

Es zeigt
Fig. 1: einen Querschnitt durch eine erfindungsgemäße Abschirmvorrichtung auf einem Abschirmfahrzeug.

Figur 1 zeigt einen Querschnitt durch eine erfindungsgemäße Abschirmvorrichtung 10 auf einem Abschirmfahrzeug 50. Das Abschirmfahrzeug 50 ist hierbei ein Anhänger, welcher zum Anhängen an ein Zugfahrzeug geeignet ist.
Auf einem Fahrgestell 44 ist ein Ständerwerk 40 angeordnet, an dem mittels einer Schwenkachse 42 ein Kragelement 12, ausgeführt als Auslegerarm, vertikal schwenkbar befestigt ist. Zur Einstellung der Position sowie zur Fixierung ist zwischen Auslegerarm 12 und Ständerwerk 40 eine hydraulische Hubeinrichtung 18 angeordnet, die aus dem Führerhaus des Fahrzeugs elektronisch fernbedienbar ist.
Der Auslegerarm 12 umfasst einen teleskopierbaren Bereich, auch als Teleskoparm 14 bezeichnet. Am Außenende 16 des Teleskoparms 14 ist mittels einer höhenverstellbaren Kette 30 eine erste Ausziehlagerung 24 befestigt, die ein erstes Abschirmflächenelement 20, ausgeführt als Plane, umfasst. Die Plane ist mit einer Seite an einer Achse der ersten Ausziehlagerung 24 befestigt und ist teilweise eingerollt. Die gegenüberliegende Seite ist mit einem Abschlusselement 36, ausgeführt als Führungsschiene 34, stabilisiert und hängt in vertikaler Richtung bis kurz über die Geländeoberfläche hinab. Analog dazu ist an dem am Ständerwerk 40 befestigten Ende des Auslegerarms 12 mittels einer höhenverstellbaren Kette 30 eine zweite Ausziehlagerung 25 mit einer teilweise aufgerollten Plane, welche das zweite Abschirmflächenelement 21 darstellt, angeordnet. Die nach unten hängende Seite dieser Plane ist mit einem Gewicht 32 verbunden, um eine vertikale Ausrichtung zu gewährleisten.
Weiterhin ist am Außenende 16 des Teleskoparms 14, an dessen Oberseite, eine dritte Ausziehlagerung 26 mit einer dritten Plane, welche ein drittes Abschirmflächenelement 22 darstellt, angeordnet. Die teilweise eingerollte Plane liegt in einer dafür ausgestalteten Mulde und das dritte Abschirmflächenelement 22 erstreckt sich an der Oberseite des Teleskoparms 14 bis hin zu einer geeignet ausgestalteten Aufnahmeeinrichtung am Auslegerarm 12 oberhalb des Fahrgestells 44 des Abschirmfahrzeugs 50.

### Bezugszeichenliste

| | |
|---|---|
| Abschirmvorrichtung | 10 |
| Kragelement | 12 |
| Teleskoparm | 14 |
| Außenende des Teleskoparms | 16 |
| Hydraulische Hubeinrichtung | 18 |
| erstes Abschirmflächenelement | 20 |
| zweites Abschirmflächenelement | 21 |
| drittes Abschirmflächenelement | 22 |
| erste Ausziehlagerung | 24 |
| zweite Ausziehlagerung | 25 |
| dritte Ausziehlagerung | 26 |
| Kette | 30 |
| Gewicht | 32 |
| Führungsschiene | 34 |
| Abschlusselement | 36 |
| Ständerwerk | 40 |
| Schwenkachse | 42 |
| Fahrgestell | 44 |
| Abschirmfahrzeug | 50 |

## Patentansprüche

1. Abschirmvorrichtung (10) für ein Abschirmfahrzeug (50) zum Schutz vor aufgewirbeltem Mähgut, insbesondere bei der Pflege von Grünstreifen einer Straße, aufweisend zumindest die folgenden Komponenten:
- ein Kragelement (12) zum Befestigen auf einem Abschirmfahrzeug (50) und dort angebracht zum ausgehend von einer Spur des betreffenden Abschirmfahrzeugs (50) Überbrücken eines Nachbarstreifens;
- ein erstes Abschirmflächenelement (20) zur Begrenzung eines Nachbarstreifens auf einer Außenseite, wobei das erste Abschirmflächenelement (20) eine Erstreckungsrichtung in einer Hauptfahrtrichtung eines Abschirmfahrzeugs (50) aufweist und die Erstreckungsrichtung an der Außenseite parallel zu einem Nachbarstreifen ausrichtbar ist;
- ein zweites Abschirmflächenelement (21) zur Begrenzung eines Nachbarstreifens auf einer Spurseite, wobei das zweite Abschirmflächenelement (21) eine Erstreckungsrichtung in einer Hauptfahrtrichtung eines Abschirmfahrzeugs (50) aufweist und die Erstreckungsrichtung an der Spurseite parallel zu einem Nachbarstreifen ausrichtbar ist,
wobei die Abschirmflächenelemente (20, 21) im Wesentlichen den gesamten Abstand zwischen dem Kragelement (12) und dem Boden abschirmend überbrücken,
**dadurch gekennzeichnet, dass** der Abstand zwischen dem ersten Abschirmflächenelement (20) und dem zweiten Abschirmflächenelement (21) veränderbar ist.

2. Abschirmvorrichtung (10) nach Anspruch **1**, wobei das Kragelement (12) zumindest einen Teleskoparm (14) umfasst, wobei das erste Abschirmflächenelement (20) bei einem Außenende (16) des Teleskoparms (14) und das zweite Abschirmflächenelement (21) bei einem Spurende derart angeordnet sind, dass der Abstand zwischen dem ersten Abschirmflächenelement (20) und dem zweiten Abschirmflächenelement (21) mittels einer Längenänderung des Teleskoparms (14) veränderbar ist, wobei besonders bevorzugt das Kragelement (12) derart verkürzbar und/oder verkippbar ist, dass dieses maximal eine Breite einer Spur überbrückt.

3. Abschirmvorrichtung (10) nach wenigstens einem der Ansprüche **1** und **2**, wobei das Kragelement (12) ein drittes Abschirmflächenelement (22) umfasst, welches bei einem Spurende und bei einem Außenende arretierbar ist und verlängerbar einen Nachbarstreifen schützt und überbrückt, wobei bevorzugt das dritte Abschirmflächenelement (22) beim Außenende oder beim Spurende ausziehbar gelagert ist.

4. Abschirmvorrichtung (10) nach wenigstens einem der vorhergehenden Ansprüche, wobei das Kragelement (12) in einer vertikalen Ebene verschwenkbar ist, und bevorzugt das Maß der herunterhängenden Tiefe des ersten Abschirmflächenelements (20) und/oder das Maß der herunterhängenden Tiefe des zweiten Abschirmflächenelements (21) anpassbar ist, bevorzugt mittels einer ersten Ausziehlagerung (24) für das erste Abschirmflächenelement (20) beziehungsweise einer zweiten Ausziehlagerung (25) für das zweite Abschirmflächenelement (21).

5. Abschirmvorrichtung (10) nach Anspruch **4**, wobei das das Kragelement (12) an einem Ständerwerk (40) in einer vertikalen Ebene verschwenkbar befestigt ist, wobei das Ständerwerk (40) auf einem Abschirmfahrzeug (50) befestigbar ist, wobei zum Verschwenken zumindest eines der folgenden Elemente vorgesehen ist:
- eine hydraulische, pneumatische oder elektrische Hubeinrichtung (18) zwischen dem Kragelement (12) und dem Ständerwerk (40),
- ein Seilzug beziehungsweise ein Kettenzug an einem gegenüberliegend des Nachbarstreifens sich erstreckenden Hebelkragabschnitts des Kragelements (12) und dem Ständerwerk (40),
wobei bevorzugt weiterhin ein Arretiermittel zum Festsetzen einer Schwenkstellung vorgesehen ist, besonders bevorzugt mit Bolzenrastung.

6. Abschirmvorrichtung (10) nach wenigstens einem der Ansprüche **4** und **5**, wobei das Kragelement (12) zwischen einer Position in im Wesentlichen paralleler Ausrichtung zur Spur und einer Position in im Wesentlichen senkrechter Ausrichtung zur Spur schwenkbar ist.

7. Abschirmvorrichtung (10) nach wenigstens einem der vorhergehenden Ansprüche, wobei zumindest ein Abschirmflächenelement (20, 21, 22) eine Plane umfasst und zur Sicherung gegen Aufwirbeln der Plane zumindest eines der folgenden Elemente umfasst:
- zumindest ein Gewicht (32) beim Bodenende der Plane;
- zumindest ein Halteseil beziehungsweise zumindest eine Haltekette.

8. Abschirmvorrichtung (10) nach wenigstens einem der vorhergehenden Ansprüche, wobei das erste Abschirmflächenelement (20) und/oder das zweite Abschirmflächenelement (21) zumindest teilweise transparent ist.

9. Abschirmfahrzeug (50) zum Schutz vor aufgewirbeltem Mähgut, insbesondere bei der Pflege von Grünstreifen einer Straße, aufweisend zumindest die folgenden Komponenten:
- ein Fahrgestell (44) zum Befahren einer Spur einer Straße;
- eine Abschirmvorrichtung (10) nach wenigstens einem der vorhergehenden Ansprüche, welche am Fahrgestell (44) befestigt ist.

10. Abschirmfahrzeug (50) nach Anspruch **9**, wobei zumindest einer der folgenden Parameter aus einem Fahrzeugführerhaus bedienbar ist, bevorzugt elektronisch:
- die Längenveränderung des Kragelements (12);
- der Schwenkwinkel des Kragelements (12) in vertikaler Richtung;
- der Schwenkwinkel des Kragelements (12) in horizontaler Richtung;
- die Tiefe des ersten Abschirmflächenelements (20);
- die Tiefe des zweiten Abschirmflächenelements (21); und
- die Breite des dritten Abschirmflächenelements (22).

11. Abschirmfahrzeug (50) nach wenigstens einem der Ansprüche **9** und **10**, wobei das Abschirmfahrzeug (50) und/oder die Abschirmvorrichtung (10) eine Aufnahme zum Transport von Werkzeug, bevorzugt umfassend einen Motorfreischneider, umfasst.

12. Abschirmfahrzeug (50) nach wenigstens einem der Ansprüche **9** bis **11**, wobei das Abschirmfahrzeug (50) ein Anhänger für ein Zugfahrzeug ist.

13. Fahrzeuggespann zur Pflege von Grünstreifen einer Straße, aufweisend einen Zugwagen mit einem Fahrzeugführerhaus und einen Anhänger, welcher ein Abschirmfahrzeug (50) nach Anspruch **12** ist, wobei der Zugwagen bevorzugt eine Steuereinheit im Fahrzeugführerhaus umfasst, mittels welcher die Abschirmvorrichtung (10) einstellbar ist, bevorzugt gemäß Anspruch **10.**

14. Verfahren zum Pflegen, insbesondere Mähen, eines Grünstreifens einer Straße, umfassend die Schritte
- Bereitstellung einer Abschirmvorrichtung gemäß wenigstens einem der Ansprüche **1** bis **8** oder eines Abschirmfahrzeugs gemäß wenigstens einem der Ansprüche **9** bis **12,**
- Abfahren des Grünstreifens bei gleichzeitiger mechanischer Einwirkung auf den Pflanzenbestand auf dem Grünstreifen, insbesondere Mähen des Grünstreifens.

## Claims

1. A shielding device (10) for a shielding vehicle (50) for protecting from thrown up mowed material, in particular for the upkeep of green strips alongside a road, comprising at least the following components:
- a cantilever element (12) for securing onto a shielding vehicle (50) and attached there for spanning a neighbouring strip from a lane of the relevant shielding vehicle (50);
- a first shielding surface element (20) for delimiting a neighbouring strip on an outer side, wherein the first shielding surface element (20) extends in a main travelling direction of a shielding vehicle (50) and the direction of extension on the outer side can be aligned to be parallel to a neighbouring strip;
- a second shielding surface element (21) for delimiting a neighbouring strip on a lane side, wherein the second shielding surface element (21) extends in a main travelling direction of a shielding vehicle (50) and the direction of extension on the lane side can be aligned to be parallel to a neighbouring strip,
wherein the shielding surface elements (20, 21) essentially span the whole distance between the cantilever element (12) and the ground in a shielding manner, **characterised in that** the distance between the first shielding surface element (20) and the second shielding surface element (21) can be varied.

2. The shielding device (10) according to claim **1,** wherein the cantilever element (12) comprises at least one telescopic arm (14), wherein the first shielding surface element (20) is arranged at an outer end (16) of the telescopic arm (14) and the second shielding surface element (21) is arranged at a lane end, such that the distance between the first shielding surface element (20) and the second shielding surface element (21) can be varied by adjusting the length of the telescopic arm (14), wherein particularly preferably the cantilever element (12) can be shortened and/or tilted so that the latter spans at the maximum a width of a lane.

3. The shielding device (10) according to at least one of claims **1** and **2,** wherein the cantilever element (12) comprises a third shielding surface element (22), which can be fixed at a lane end and at an outer end and protects and spans a neighbouring strip in an extendable manner, wherein preferably the third shielding surface element (22) is mounted to be extendable at the outer end or at the lane end.

4. The shielding device (10) according to at least one of the preceding claims, wherein the cantilever element (12) can be pivoted in a vertical plane, and preferably the dimension of the hanging down depth of the first shielding surface element (20) and/or the dimension of the hanging down depth of the second shielding surface elements (21) can be adjusted, preferably by means of a first extendable bearing (24) for the first shielding surface element (20) or a second extendable bearing (25) for the second shielding surface element (21).

5. The shielding device (10) according to claim **4,** wherein the cantilever element (12) is secured pivotably on a stand (40) in a vertical plane, wherein the stand (40) can be secured onto a shielding vehicle (50), wherein for pivoting at least one of the following elements is provided:
- a hydraulic, pneumatic or electrical lifting device (18) between the cantilever element (12) and the stand (40),
- a pulley or a chain hoist on a lever cantilever section of the cantilever element (12) extending opposite the neighbouring strip and the stand (40),
wherein preferably also a locking means is provided for setting a pivot position, particularly preferably by means of a bolt lock.

6. The shielding device (10) according to at least one of claims **4** and **5,** wherein the cantilever element (12) can be pivoted between a position in an essentially parallel alignment to the lane and a position essentially in perpendicular alignment to the lane.

7. The shielding device (10) according to at least one of the preceding claims, wherein at least one shielding surface element (20, 21, 22) comprises a tarpaulin and comprises at least one of the following elements for preventing the tarpaulin being thrown up:
- at least one weight (32) at the ground end of the tarpaulin;
- at least one holding rope or at least one holding chain.

8. The shielding device (10) according to at least one of the preceding claims, wherein the first shielding surface element (20) and/or the second shielding surface element (21) is at least partly transparent.

9. A shielding vehicle (50) for protecting from thrown up mowed material, in particular during the upkeep of green strips alongside a road, comprising at least the following components:
- a vehicle chassis (44) for driving on a lane of a road;
- a shielding device (10) according to at least one of the preceding claims, which is secured onto the vehicle chassis (44).

10. The shielding vehicle (50) according to claim **9,** wherein at least one of the following parameters can be operated from a driver's cab, preferably electronically:
- the length adjustment of the cantilever element (12);
- the pivot angle of the cantilever element (12) in vertical direction;
- the pivot angle of the cantilever element (12) in horizontal direction;
- the depth of the first shielding surface element (20);
- the depth of the second shielding surface element (21) and
- the width of the third shielding surface element (22).

11. The shielding vehicle (50) according to at least one of claims **9** and **10,** wherein the shielding vehicle (50) and/or the shielding device (10) comprises a mount for transporting tools, preferably comprising a motorised brushcutter.

12. The shielding vehicle (50) according to at least one of claims **9** to **11,** wherein the shielding vehicle (50) is a trailer for a towing vehicle.

13. A vehicle combination for maintaining the green strip alongside a road, comprising a towing vehicle with a driver's cab and a trailer which is a shielding vehicle (50) according to claim **12,** wherein the towing vehicle preferably comprises a control unit in the driver's cab, by means of which the shielding device (10) can be adjusted, preferably according to claim **10.**

14. A method for maintaining, in particular mowing, a green strip alongside a road, comprising the steps:
- providing a shielding device according to at least one of claims **1** to **8** or a shielding vehicle according to at least one of claims **9** to **12,**
- driving along the green strip while simultaneously acting mechanically on the plants on the green strip, in particular mowing the green strip.

## Revendications

1. Dispositif de blindage (10) pour un véhicule de blindage (50) destiné à la protection contre la matière soulevée lors du fauchage, notamment pour le maintien de bandes de verdure d'une rue, comprenant au moins l'un des composants suivants :
- un élément en porte-à-faux (12), destiné à être fixé sur un véhicule de blindage (50) et qui y est fixé à partir d'une des voies du véhicule de blindage pour recouvrir une bande adjacente
- un premier élément plat de blindage (20) destiné à délimiter une bande adjacente sur un côté extérieur, présentant une direction d'extension dans une des directions de déplacement principales d'un véhicule de blindage (50) et pour lequel la direction d'extension est, au niveau du côté extérieur, orientable parallèlement à une bande adjacente
- un deuxième élément plat de blindage (21) destiné à délimiter une bande adjacente sur un côté de la voie, présentant une direction d'extension dans une des directions de déplacement principales d'un véhicule de blindage (50) et pour lequel la direction d'extension est, au niveau du côté de la voie, orientable parallèlement à une bande adjacente
pour lequel les éléments plats de blindage (20, 21) protègent et couvrent pratiquement toute la distance entre l'élément en porte-à-faux (12) et le sol,
**caractérisé en ce que** la distance entre le premier élément plat de blindage (20) et le deuxième élément plat de blindage (21) est réglable.

2. Dispositif de blindage (10) selon la revendication **1,** pour lequel l'élément en porte-à-faux (12) comprend au moins un bras télescopique (14), pour lequel le premier élément plat de blindage (20) et le deuxième élément plat de blindage (21) sont disposés respectivement au niveau d'une extrémité extérieure (16) du bras télescopique et au niveau d'une extrémité de la voie de telle sorte que la distance entre le premier élément plat de blindage (20) et le deuxième élément plat de blindage (21) est réglable à l'aide d'un changement de longueur du bras télescopique (14) et pour lequel l'élément en porte-à-faux (12) peut, de préférence, être raccourci ou basculé de telle sorte que ce dernier occupe au maximum la largeur d'une voie.

3. Dispositif de blindage (10) selon au moins l'une des revendications **1** et 2, pour lequel l'élément en porte-à-faux (12) comprend un troisième élément plat de blindage (22), lequel peut être bloqué au niveau d'une extrémité de voie ou d'une extrémité extérieure et peut, de par son caractère extensible, protéger et couvrir une bande adjacente, pour lequel le troisième élément plat de blindage (22) est monté, de préférence, de manière à être extensible au niveau de l'extrémité extérieure ou de l'extrémité de la voie.

4. Dispositif de blindage (10) selon au moins l'une des revendications précédentes, pour lequel l'élément en porte-à-faux (12) peut être pivoté dans un plan vertical, pour lequel la profondeur de la partie suspendue du premier élément plat de blindage (20) ou la profondeur de la partie suspendue du deuxième élément plat de blindage (21) sont adaptables, de préférence au moyen d'un premier palier d'extension (24) pour le premier élément plat de blindage (20) et de préférence au moyen d'un deuxième palier d'extension (25) pour le deuxième élément plat de blindage (21).

5. Dispositif de blindage (10) selon la revendication **4,** pour lequel l'élément en porte-à-faux (12) est fixé à un montant (40) de manière à pouvoir être pivoté dans un plan vertical, pour lequel le montant (40) peut être fixé sur un véhicule de blindage (50), pour lequel au moins l'un des éléments suivants est prévu pour l'opération de pivotement :
- un dispositif de levage (18) hydraulique, pneumatique ou électrique situé entre l'élément en porte-à-faux (12) et le montant (40)
- un tirant à câble ou un palan à chaînes situé sur une portion de levier de l'élément en porte-à-faux (12) et du montant (40) s'étendant à l'opposé de la bande adjacente pour lequel est prévu, de préférence, un moyen de blocage destiné à fixer une position de pivotement, de préférence avec une encoche d'axe.

6. Dispositif de blindage (10) selon au moins l'une des revendications **4** et **5,** pour lequel l'élément en porte-à-faux (12) peut pivoter entre une position essentiellement parallèle à la voie et une position essentiellement perpendiculaire à la voie.

7. Dispositif de blindage (10) selon au moins l'une des revendications précédentes, pour lequel au moins un des éléments plats de blindage (20, 21, 22) comprend une bâche et comprend au moins l'un des éléments suivants destinés à empêcher la bâche de se soulever :
- au moins un poids (32) à l'extrémité de la bâche
- au moins un câble ou une chaîne de retenue

8. Dispositif de blindage (10) selon au moins l'une des revendications précédentes, le premier élément plat de blindage (20) ou le deuxième élément plat de blindage (21) étant au moins partiellement transparent.

9. Véhicule de blindage (50) destiné à la protection contre la matière soulevée lors du fauchage, notamment pour le maintien de bandes de verdure d'une rue, comprenant au moins l'un des composants suivants :
- un châssis (44) prévu pour le passage sur la voie d'une rue
- un dispositif de blindage (10) selon au moins l'une des revendications précédentes, fixé au châssis

10. Véhicule de blindage (50) selon la revendication 9, pour lequel au moins l'un des paramètres suivants peut être réglé via une cabine de véhicule, de préférence électronique :
- le changement de longueur de l'élément en porte-à-faux (12)
- l'angle de pivotement de l'élément en porte-à-faux (12) dans une direction verticale
- l'angle de pivotement de l'élément en porte-à-faux (12) dans une direction horizontale
- la profondeur du premier élément plat de blindage (20)
- la profondeur du deuxième élément plat de blindage (21)
- la largeur du troisième élément plat de blindage (22)

11. Véhicule de blindage (50) selon au moins l'une des revendications **9** et **10,** le véhicule de blindage (50) ou le dispositif de blindage (10) comprenant un logement destiné au transport d'outils, y compris, de préférence, un outil de coupe motorisé.

12. Véhicule de blindage (50) selon au moins l'une des revendications **9** à **11,** faisant office de remorque pour un véhicule tracteur.

13. Attelage de véhicule destiné au maintien de bandes de verdure d'une rue, présentant un véhicule tracteur avec une cabine et une remorque, laquelle est un véhicule de blindage (50) selon la revendication **12,** le véhicule tracteur comprenant de préférence une unité de commande, qui permet de régler le dispositif de blindage (10) selon, de préférence, la revendication **10.**

14. Procédé de maintien, notamment de fauchage, d'une bande de verdure d'une rue, comprenant les étapes suivantes :
- mise à disposition d'un dispositif de blindage selon au moins l'une des revendications **1** à **8** ou d'un véhicule de blindage selon au moins l'une des revendications **9** à **12**
- transport de la bande de verdure parallèlement à une action mécanique sur les plantes de la bande de verdure, notamment le fauchage de la bande de verdure
